# EUROPÄISCHE PATENTSCHRIFT

(11) **EP 0 711 620 B1**
(45) Veröffentlichungstag und Bekanntmachung des Hinweises auf die Patenterteilung: **07.01.1998**
(21) Anmeldenummer: 94117684.4
(22) Anmeldetag: 09.11.1994
(51) Int. Cl.: B23C 5/12

(54) **Fräser für eine Radsatzfräsmaschine**
Milling cutter for a wheel-set milling machine
Fraise pour une machine à fraiser les essieux

(43) Veröffentlichungstag der Anmeldung: 15.05.1996
(73) Patentinhaber: HEGENSCHEIDT-MFD GmbH, D-41812 Erkelenz (DE)
(72) Erfinder: Heimann, Alfred Dr. Ing., D 52078 Aachen (DE)
(74) Vertreter: Castell, Klaus, Dr.-Ing.

(56) Entgegenhaltungen:
- AT-B- 167 889
- DE-B- 1 179 080
- DE-C- 489 786
- 'WERKSTATTBLATT 462 Gruppe E' 1968 , CARL HANSER VERLAG , MüNCHEN, DE * Absatz 5; Abbildungen 21-23 *

## Beschreibung

Bei der Erfindung geht es um Fräser für eine Radsatzfräsmaschine mit mehreren an einem im wesentlichen rotationssymmetrischen, drehantreibbaren Tragkörper profilgerecht und in Umfangsrichtung verteilt angeordneten Schneidelementen; siehe z.B. AT-B 167 889. Fräser der eingangs beschriebenen Art sind bekannt und haben sich bei der Reprofilierung der verschlissenen Räder an Radsätzen von Schienenfahrzeugen prinzipiell bewährt. Die Fräser nach dem Stand der Technik sind durchgängig in Form des gesamten Profils des zu bearbeitenden Rades ausgebildet und erlauben daher bei einer reinen radialen Verschiebung des Profils in Richtung der Drehachse des Rades eine Fertigbearbeitung des Rades in einem Schritt, ohne dazu verschiedene Werkzeuge zu benötigen.

Es ist jedoch charakteristisch für das Verschleißbild überholungsbedürftiger Radsatzprofile, daß der Hauptverschleiß, d. h. der überwiegende Materialabtrag am Profil, im Bereich der Spurkranzflanke und dem angrenzenden Gebiet der Lauffläche auftritt. Geht man nun bei der Reprofilierung eines derart verschlissenen Rades mittels eines die Sollprofilkontur aufweisenden Formfräsers in einer solchen Weise vor, daß die neu herausgearbeitete Profilkontur zu der ursprünglichen Kontur lediglich radial, d.h. in Richtung einer zur Radsatzachse senkrechten Achse parallel, verschoben ist, so sind trotz der nur stellenweise großen Verschleißtiefe erhebliche Zerspanungsquerschnitte erforderlich, um die Sollkontur herausbilden zu können. Um bei wesentlich geringerem Zerspanungsquerschnitt ebenfalls das Sollprofil, wenigstens im Bereich der Lauffläche und der Spurkranzflanke erzeugen zu können, bietet es sich an, das Sollprofil, d. h. den Formfräser, in Richtung der Innenseite des Rades parallel zur Radsatzachse oder parallel zur leicht konischen Lauffläche zu verschieben, um den neu auszubildenen Spurkranz "höher" in Bereiche des verbliebenen "Restspurkranzes" des verschlissenen Profils zu lagern. Mit Hilfe relativ geringer axialer Profilverschiebungen in Richtung der Radinnenseite, die innerhalb gewisser Grenzen für das Laufverhalten des Radsatzes auf der Schiene als unkritisch anzusehen sind, lassen sich somit erhebliche Einsparungen beim Zerspanungsvolumen und der Bearbeitungszeit erzielen. Der gravierende Nachteil dieser Fräsbearbeitung mit einer Profilverschiebung durch axiales Verschieben des Formfräsers liegt jedoch darin, daß aufgrund der nicht parallel zur Radsatzachse verlaufenden Ausläufe der Profilkonturen sowohl auf der Innen- als auch auf der Außenseite des Rades eine axiale oder zur Lauffläche tangentiale Verschiebung des Fräsers zwangsläufig eine Falschbearbeitung der Ränder der neuen Profilkontur zur Folge hat. Dabei entsteht auf der Innenseite des Rades aufgrund der nicht mehr zur Anlage gelangenden innersten Schneidelemente des Fräsers ein Profilauslauf auf zu großem Durchmesser und auf der Außenseite des Rades ein Profilbeginn auf zu kleinem Durchmesser, möglicherweise mit einem Absatz zur Radaußenfläche. Daraus resultiert der schwerwiegende Nachteil, daß das Rad zur Erzielung der korrekten Übergänge des Profils zu den Seitenflächen des Rades in einem weiteren Schritt mit anderen Werkzeugen nachbearbeitet werden muß, woraus eine erhebliche Steigerung der Bearbeitungszeit und Kosten resultiert. Dabei ist eine Nachbearbeitung des Spurkranzrückens auf der Radinnenseite des Rades unerläßlich.

Der Erfindung liegt somit die Aufgabe zugrunde, bei der Reprofilierung der Räder von Eisenbahnradsätzen eine Fräsbearbeitung mit axialer Profilverschiebung in einem Arbeitsgang ohne Fräserwechsel zu ermöglichen, um so die Bearbeitungszeit und die Kosten zu senken.

Erfindungsgemäß wird ist diese Aufgabe dadurch gelöst, daß der Tragkörper in axialer Richtung in mehrere Segmente unterteilt ist, wobei mindestens ein Segment axial beweglich und einstellbar ist. Hierdurch wird erreicht, daß z. B. bei einer Verschiebung des Profils eines Rades im Bereich der Lauffläche und Spurkranzflanke, bspw. bei der Zweiteilung des Fräsers, ein den Spurkranzrücken erzeugendes Segment entgegen der Profilverschiebung (nach innen), relativ zur verschobenen Lauffläche und Spurkranzflanke um etwa denselben Betrag nach außen verschoben wird. Somit ergibt sich eine vorschriftsmäßige Profilkontur im Bereich des Profilauslaufs auf der Radinnenseite, so daß eine nach dem StdT. erforderliche Nachbearbeitung mit einem anderen Werkzeug entfallen kann.

Ist der erfindungsgemäße Fräser z. B. in drei Segmente unterteilt, so läßt sich mittels einer weiteren relativen Verschiebung, z. B. eines die Außenseite erzeugenden dritten Segments, auch der Profilauslauf der Außenseite vorschriftsmäßig ausbilden. Der erfindungsgemäße Fräser weist also den erheblichen Vorteil auf, daß bei der Reprofilierung von Eisenbahnrädern eine den Anforderungen an die Profilkontur gerecht werdende Fräsbearbeitung mit einer axialen Profilverschiebung in einem Arbeitsgang ohne Fräserwechsel ermöglicht wird. Hierdurch entstehen im Vergleich zu einer Bearbeitung mit Fräsern nach dem StdT. deutliche Zeit- und Kostenvorteile.

Gemäß zweier Ausgestaltungen der Erfindung wird vorgeschlagen, daß mindestens zwischen zwei benachbarten Segmenten ein Drehmoment in axiale Richtung kraftschlüssig oder formschlüssig übertragbar ist. Auf diese Weise wird ermöglicht, daß eine kraft- oder formschlüssige Übertragung des Drehmoments auf mindestens ein Segment nicht direkt von der Fräserwelle her erfolgen muß, so daß hinsichtlich der Gestaltung der Lagerung oder Verbindung der Segmente mit der Fräserwelle eine große Freiheit besteht.

Eine vorteilhafte Ausführungsform der Erfindung ergibt sich, wenn eine mindestens teilweise formschlüssige Übertragung des Drehmoments mittels einer Verzahnung in Form einer Klauenkupplung mindestens zwischen jeweils zwei benachbarten Segmenten erfolgt. Dies stellt eine einfach zu fertigende und sehr geringes Spiel aufweisende Verbindung dar, die die zur Fräsbearbeitung erforderlichen Drehmomente problemlos übertragen kann.

Es ist weiter möglich, daß mindestens ein Segment einstückig mit einer Fräserwelle verbunden ist. Eine einstückige Verbindung mit der Fräserwelle erlaubt die Übertragung großer Drehmomente, ohne daß die Gefahr einer Überlastung einer (dadurch ersetzten) Wellennabenverbindung besteht und bietet weiterhin den Vorteil, daß die Deformationen infolge der Drehmomentbelastung minimal sind, so daß sich in Bereichen derartig verbundener Segmente höchste Fertigungsgenauigkeiten bei einem zugeordneten, zu erzeugenden Konturabschnitt erzielen lassen.

Nach einer anderen Ausführungsvariante des erfindungsgemäßen Fräsers ist vorgesehen, daß ein die Lauffläche und die Spurkranzflanke eines zu bearbeitenden Rades erzeugendes Segment des Tragkörpers des Fräsers mit der Fräserwelle aus einem Stück ist und sowohl ein die Außenseite als auch ein den Spurkranzrücken des zu bearbeitenden Rades erzeugendes Segment relativ zu dem einstückig verbundenen Segment axial verschiebbar und einstellbar ist. Auf diese Weise lassen sich die im Bereich der Lauffläche und Spurkranzflanke geforderten höchsten Bearbeitungsqualitäten erzeugen. Durch Verschiebung zweier Segmente, die den Spurkranzrücken sowie die Außenseite des Profils erzeugen, wo die Anforderungen an die Genauigkeit nicht ganz so hoch liegen, läßt sich somit eine Profilverschiebung mit Spurkranzschwächung, d. h. korrekt geformtem Profilübergang auf der Innenseite, sowie einem vorschriftsmäßigen Profilübergang auch auf der Außenseite des Rades mit einem einzigen Fräser und Arbeitsgang erzeugen.

Die Erfindung weiter ausgestaltend wird vorgeschlagen, daß die die Außenseiten und den Spurkranzrücken erzeugenden Segmente mittels mindestens einer durch das die Lauffläche und die Spurkranzflanke erzeugende Segment hier durchgeführten Zug-/Druckstange gekoppelt sind. Durch die Synchronisierung der Bewegungen der beiden die außen- und innengelegenen Profilrandbereiche erzeugenden Segmente ist die Verstellung lediglich eines der beiden Segmente erforderlich, wodurch zwangsläufig die richtige Lage beider Elemente relativ zum dazwischenliegenden, einstückig mit der Fräserwelle verbundenen Segment gewährleistet ist. Die Verwendung von Zug-/Druckstangen (je nach Verstellrichtung und verstelltem Segment) stellt dabei eine zweckmäßige und robuste Lösung der Kopplung der durch das Mittelsegment getrennten Randsegmente dar.

Des weiteren wird nach der Erfindung vorgeschlagen, daß mindestens Teile mindestens eines an mindestens einem Segment angeordneten Schneidelements bis in einen Zerspanungsbereich eines benachbarten Segments derart hineinragen, daß eine mindestens teilweise Überlappung der Zerspanungsbereiche benachbarter Segmente in verschiedenen axialen Stellungen jeweils benachbarter Segmente zueinander vorliegt. Hierdurch kann eine Verstellung eines axial beweglichen Segments relativ zu einem anderen ermöglicht werden, ohne daß, z. B. bei einem Entfernen der benachbarten Segmente voneinander, zusätzliche Schneidelemente eingefügt oder bei einem Aufeinander-Zu-Bewegen zweier Segmente Schneidelemente entfernt werden müssen. Dadurch kann die Rüstzeit deutlich verkürzt werden.

Ferner ist vorgeschlagen, daß die in einen Zerspanungsbereich eines benachbarten Segments hineinragenden Schneidelemente eines jeweils zugeordneten Segments eine geradlinige Schneidenkontur aufweisen. Auf diese Weise lassen sich relativ große Verstellbewegungen realisieren, wobei dennoch eine übergangslose Bearbeitung in weiten axialen Verstellbereichen möglich ist.

Nach einer anderen Ausgestaltung der Erfindung ist vorgesehen, daß eine beidseitige Lagerung der Fräserwelle in einer Lagereinheit vorgesehen ist. Bei entsprechender Abstützung und Führung der Lagereinheit ist somit eine biegesteife Lagerung des Fräsers sichergestellt, wodurch eine schwingungsarme und entsprechend genaue Bearbeitung gewährleistet werden kann.

Ferner wird vorgeschlagen, daß der Fräser zusammen mit der Lagereinheit entsprechend der Lage des zu bearbeitenden Rades in axialer Richtung beweglich und einstellbar ist. Auf diese Weise läßt sich eine kompakte Bauweise der Lagereinheit realisieren, und auf eine axiale Verstellmöglichkeit in den Lagerungen in der Lagereinheit kann verzichtet werden.

Weiterhin ist es auch möglich, daß der Fräser zusammen mit der Lagereinheit austauschbar ist. Eine aufwendige Entfernung der beidseitig gelagerten Fräserwelle aus Lagereinheit ist somit zum Zeitpunkt des Werkzeugwechsels nicht erforderlich, so daß sich geringe Stillstandszeiten der Fräsmaschine ergeben.

Den erfindungsgemäßen Fräser weiter ausgestaltend ist vorgesehen, daß mindestens ein nach außen offener Hohlraum zwischen zwei benachbarten, relativ zueinander beweglichen Segmenten des Fräsers radial von innen nach außen von einem aus mindestens einer Öffnung in mindestens einem der zugeordneten Segmente des Tragkörpers und/oder in der Fräserwelle austretenden Strömungsmedium durchströmt wird, wobei das Strömungsmedium über mindestens eine Öffnung in mindestens einen in der Fräserwelle befindlichen, vom Antriebsende her durchgängigen, mit mindestens einer Öffnung verbundenen und ansonsten abgeschlossenen Kanalraum in mindestens einen Hohlraum einbringbar ist. Hierdurch werden die beim Bearbeitungsprozeß anfallenden Späne aus den Hohlräumen zwischen den Segmenten entfernt, so daß eine Verstellung der beweglichen Segmente zu jeder Zeit ohne vorherige Reinigung erfolgen kann, was wiederum zu einer Rüstzeitreduzierung führt.

Nach einer anderen Ausgestaltung der Erfindung wird vorgeschlagen, daß der Fräser zusammen mit der gesamten Lagereinheit mittels einer auf der Innenseite oder der Außenseite eines zu bearbeitenden Rades anliegenden und axial verstellbaren Anschlagrolle geführt wird. Dadurch wird eine sichere und exakte Führung des Fräsers zu einer als Bezugsebene für die Bearbeitung in Frage kommenden Fläche ermöglicht.

Schließlich ist es auch möglich, daß der Fräser zusammen mit der gesamten Lagereinheit mechanisch mit ein zu bearbeitendes Rad radial und axial führenden Stütz- und/oder Antriebsrollen gekoppelt und relativ zu diesen einstellbar ist. Als Bezugspunkte dienen dabei die Stütz- oder Antriebsrollen eines der beiden Räder des zu bearbeitenden Radsatzes, die in ihrer Lage zum zu bearbeitenden Rad aufgrund ihrer Führungsfunktion genau definiert sind.

Die Erfindung soll nachfolgend anhand der beigefügten Zeichnungen, die eine beispielhafte Ausführung darstellen, genauer erläutert werden.

Dabei zeigen:
- Figur 1:: Schematische Darstellung eines Längsschnitts durch einen erfindungsgemäßen, in drei Segmente unterteilten und in einer Lagereinheit gelagerten Fräsers in Anlage an einem zu bearbeitenden Rad
- Figur 2:: Schematische Darstellung eines Querschnitts durch einen Fräser im Bereich einer Trennstelle zwischen zwei benachbarten Segmenten mit Schneidelementen
- Figur 3:: Schematische Darstellung einer Abwicklung einer als Klauenkupplung ausgebildeten Trennstelle zwischen zwei benachbarten Segmenten in einer Draufsicht
- Figur 4:: Schematische Ansicht eines länglichen Schneidelement mit geradliniger Schneidenkontur

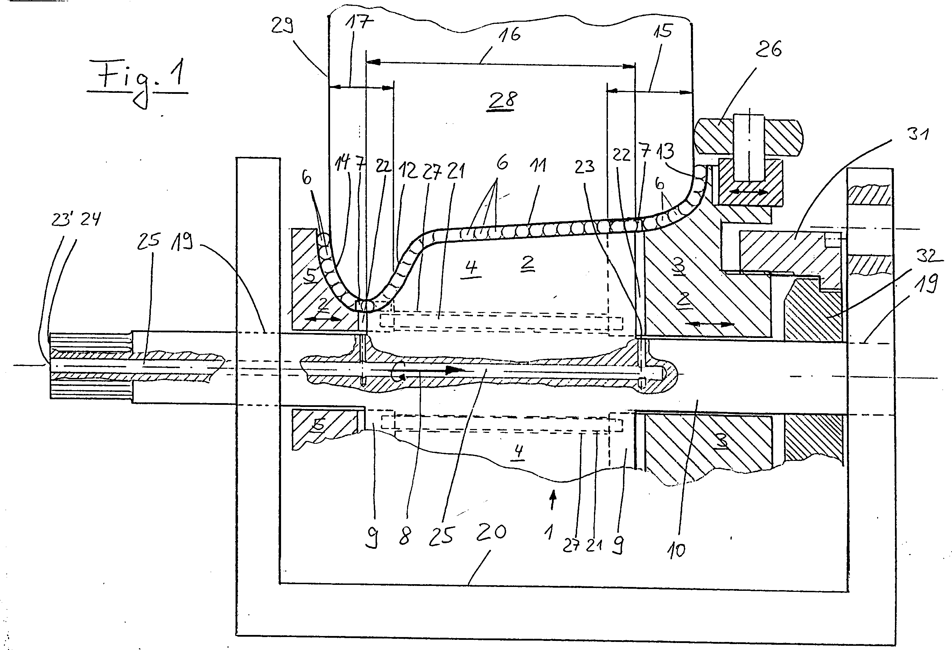

Fig. 1 zeigt, wie der Tragkörper 2 eines in zwei Lagerungen 19 einer Lagereinheit 20 gelagerten Fräsers 1 z. B. in drei Segmente 3, 4, 5 unterteilt ist, an denen profilgerecht und in Umfangsrichtung verteilt mehrere Schneidelemente 6, 7 angeordnet sind. Das über das Antriebsende 24 in die Fräserwelle 10 eingeleitete Drehmoment 8 wird zunächst direkt in das einstückig mit der Fräserwelle 10 verbundene Segment 4 weitergeleitet. Auf die auf der Fräserwelle 10 axial verschiebbar und einstellbar angeordneten Segmente 3, 5 wird das Drehmoment über eine die jeweils benachbarten Segmente 3, 4 und 4, 5 verbindende Verzahung 9 in Form einer Klauenkupplung übertragen.

Des weiteren geht hervor, wie die axiale Lage des Fräsers 1 samt der Lagereinheit 20 mittels einer z. B. an der Außenseite 13 des zu bearbeitenden Rades 28 anliegenden Anschlagrolle 26 einstellbar ist. Eine Führung durch eine Axialanschlagrolle 26 auf der Innenseite 29 des Rades 28 ist jedoch genauso möglich. Als Alternative zu dieser Führung durch eine Anschlagrolle 26 ist eine nicht abgebildete mechanische Kopplung der Lagereinheit 20 mit den das zu bearbeitende Rad radial und axial führenden Stütz- und/oder Antriebsrollen denkbar, die ebenfalls eine exakte axiale Justierung des Fräsers 1 in Bezug auf das zu bearbeitende Rad 28 erlaubt.

Die axiale Ausrichtung des Fräsers 1 relativ zum Rad 28 erfolgt dabei in Abhängigkeit von der Profilkontur des verschlissenen Rades derart, daß zum Erhalt des Sollprofils im Bereich der Lauffläche 11 und der Spurkranzflanke 12 ein möglichst geringer Zerspanungsquerschnitt erforderlich ist. Dabei ist der zur Reduzierung des Zerspanungsquerschnitts führenden axialen Profilverschiebung aufgrund der Erfordernisse guter Laufeigenschaften und hoher Betriebssicherheit eine Grenze gesetzt. Wird z. B., wie aus Fig. 1 ersichtlich ist, das mittlere, einstückig mit der Fräserwelle 10 verbundene Segment 4 in eine Lage gebracht, die dem maximal tolerierbaren Betrag der Profilverschiebung nach innen entspricht, so müssen die mittels z. B. vier Zug-/Druckstangen 21, die in Bohrungen 27 durch das Segment 4 geführt werden, gekoppelten Segmente 3 und 5 um einen entsprechenden Betrag nach außen verschoben werden, um eine vorschriftsmäßige Gestalt der Übergänge des Profils in die Radseitenflächen zu erhalten. Dabei wird mittels des Segments 3 die Außenseite 13 und mittels des Segments 5 der Spurkranzrücken 14 erzeugt. Durch die Kopplung mittels der Zug-/Druckstangen 21 ist es lediglich erforderlich, eines der Segmente 3 oder 5 zu verschieben, und eine Synchronisierung der Verstellung beider Segmente 3 und 5 ist somit gewährleistet. In Figur 1 ist dargestellt, wie z. B. Segment 3 mittels einer bekannten und mit einem Innengewinde versehenen Einstellhülse 31 relativ zu einer auf die Fräserwelle 10 aufgeschrumpften Ringscheibe 32 verstellbar ist. Die Betätigung der Einstellhülse 31 kann z. B. mittels eines entsprechenden Schlüssels oder sonstigen Werkzeug auf manuelle Weise, ebenso jedoch auch automatisch mittels einer bekannten Verstelleinrichtung, die z. B. auf dem Prinzip eines motorgetriebenen Zahradgetriebes beruhen kann, erfolgen.

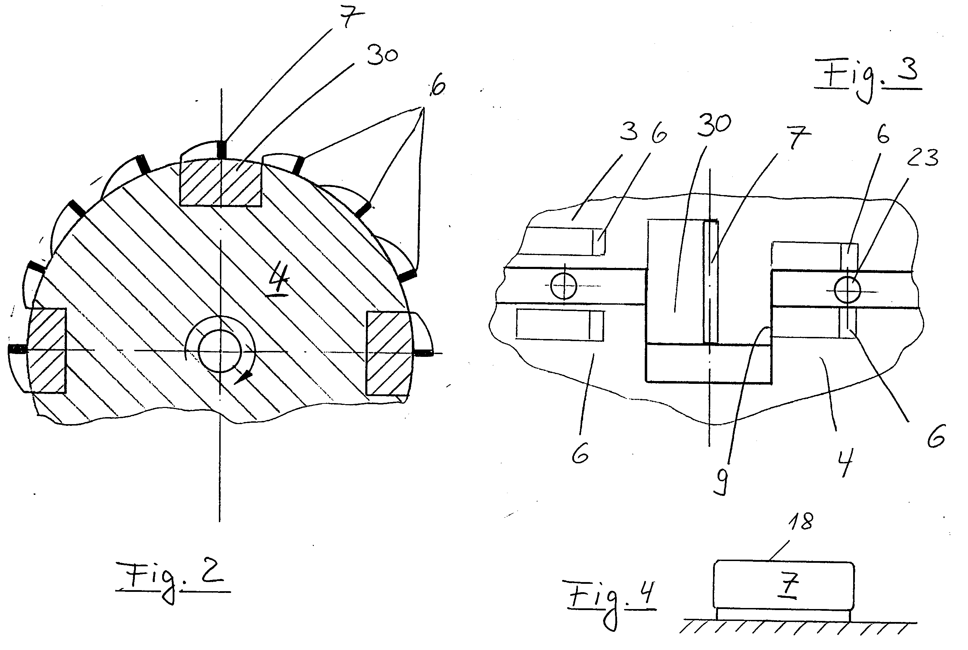

Aus Fig. 3 läßt sich ablesen, wie die Verzahnung 9 z. B. in Form einer Klauenkupplung ausgebildet sein kann. Diese Klauenkupplung ermöglicht eine axiale Verschiebbarkeit z.B. der benachbarten Segmente 3 und 4 bei gleichzeitiger Übertragung eines Drehmoments über den Formschluß der Verbindung. Weiterhin läßt sich erkennen, wie z. B. auf den Klauen 30 des mittels einer Verzahnung 9 mit dem starren Segment 4 verbundenen Segments 3 längliche Schneidelemente 7 mit einer geradlinigen Schneidenkontur 18 (dargestellt in Figur 4) angeordnet sind, die einen weiten Verstellbereich der Segmente zueinander ermöglichen. Bei den übrigen, nicht auf den Klauen 30 angeordneten Schneidelementen 6 handelt es sich vorzugsweise um runde Schneidplatten. Aus Fig. 2 läßt sich entnehmen, wie sich durch eine Anordnung der länglichen Schneidplatten 7 auf den Klauen 30 der beweglichen Segmente 3 und 5 (und zwar in einem Abstand, der deutlich größer ist als der Abstand der auf dem starren, mittleren Segment 4 angeordneten runden Schneidelementen 6 zueinander) im Übergangsbereich auf Seiten des mittleren, starren Segments 4, d. h. im Bereich der Lauffläche 11 und der Spurkranzflanke 12 die dort geforderte sehr hohe Fertigungsgenauigkeit erzielen läßt.

Aus Fig. 1 kann abgelesen werden, wie sich je zwei benachbarte Zerspanungsbereiche 15 und 16 sowie 16 und 17, die den jeweils benachbarten Segmenten 3 und 4 sowie 4 und 5 zugeordnet sind, überlappen, wobei im gesamten Zerspanungsbereich 16, der der Lauffläche 11 und der Spurkranzflanke 12 zugeordnet ist, in dichtem Abstand vorzugsweise Schneidelemente 6 in Form von Rundschneidplatten angeordnet sind, um dort die höchste Bearbeitungsqualität zu erreichen. Durch die Überlappung der Zerspanungsbereiche der länglichen, eine geradlinige Schneidenkontur 18 aufweisenden Schneidelemente 7 ist ein großer Verstellbereich realisiert.

Ferner ist aus Fig. 1 entnehmbar, daß ein Kanalraum 25, der von einer konzentrisch vom Antriebsende 24 her in die Fräserwelle 10 sowie von mehreren senkrecht hierzu in die Fräserwelle 10 (bzw. in das einstückig mit der Fräserwelle 10 verbundene Segment 4 des Tragkörpers 2) eingebrachten Bohrungen gebildet wird und nur die Öffnungen 23 in der Fräserwelle 10 und/oder dem Tragkörper 2 sowie die Öffnung 23' am Antriebsende 24 aufweist, und eine Verbindung vom Antriebsende 24 zu den nach außen offenen Hohlräumen 22 an der Trennstelle zwischen jeweils zwei Segmenten herstellt.

Durch diesen Kanalraum 25 wird vom Antriebsende her als Strömungsmedium z. B. Druckluft geblasen, um so die Hohlräume 22 während des Bearbeitungsvorgangs frei von Spänen zu halten, damit eine Verstellung der Segmente 3 und 5 beim nächsten zu bearbeitenden Rad 28 ohne eine vorherige Reinigung erfolgen kann.

### Liste der verwendeten Bezugszeichen

- 1: Fräser
- 2: Tragkörper
- 3: Segment
- 4: Segment
- 5: Segment
- 6: Schneidelement
- 7: Schneidelement
- 8: Drehmoment
- 9: Verzahnung
- 10: Fräserwelle
- 11: Lauffläche
- 12: Spurkranzflanke
- 13: Außenseite
- 14: Spurkranzrücken
- 15: Zerspanungsbereich
- 16: Zerspanungsbereich
- 17: Zerspanungsbereich
- 18: Schneidenkontur
- 19: Lagerung
- 20: Lagereinheit
- 21: Zug-/Druckstange
- 22: Hohlräume
- 23,23': Öffnung
- 24: Antriebsende
- 25: Kanalraum
- 26: Anschlagrolle
- 27: Bohrung
- 28: Rad
- 29: Innenseite
- 30: Klaue
- 31: Einstellhülse
- 32: Ringscheibe

## Patentansprüche

1. Fräser (1) für eine Radsatzfräsmaschine mit mehreren an einem im wesentlichen rotationssymmetrischen, drehantreibbaren Tragkörper (2) profilgerecht und in Umfangsrichtung verteilt angeordneten Schneidelementen (6,7), dadurch gekennzeichnet, daß der Tragkörper (2) in axialer Richtung in mehrere Segmente (3,4,5) unterteilt ist, wobei mindestens ein Segment (3,4,5) axial beweglich und einstellbar ist.

2. Fräser nach Anspruch 1, dadurch gekennzeichnet, daß zwischen mindestens zwei benachbarten Segmenten (3,4,5) ein Drehmoment (8) in axiale Richtung kraftschlüssig übertragbar ist.

3. Fräser nach Anspruch 1, dadurch gekennzeichnet, daß zwischen mindestens zwei benachbarten Segmenten (3,4,5) ein Drehmoment (8) in axialer Richtung formschlüssig übertragbar ist.

4. Fräser nach Anspruch 3, dadurch gekennzeichnet, daß eine mindestens teilweise formschlüssige Übertragung des Drehmoments (8) mittels einer Verzahnung (9) in Form einer Klauenkupplung zwischen jeweils mindestens zwei benachbarten Segmenten (3,4,5) erfolgt.

5. Fräser nach Anspruch 1, dadurch gekennzeichnet, daß mindestens ein Segment (3,4,5) einstückig mit einer Fräserwelle (10) ist.

6. Fräser nach einem der Ansprüche 1 bis 5, dadurch gekennzeichnet, daß ein die Lauffläche (11) und die Spurkranzflanke (12) eines zu bearbeitenden Rades (28) erzeugendes Segment (4) des Tragkörpers (2) des Fräsers (1) mit der Fräserwelle (10) aus einem Stück ist und sowohl ein die Außenseite (13) als auch ein den Spurkranzrücken (14) des zu bearbeitenden Rades (28) erzeugendes Segment (3,5) relativ zu dem einstückig verbundenen Segment (4) axial verschiebbar und einstellbar ist.

7. Fräser nach Anspruch 6, dadurch gekennzeichnet, daß die die Außenseiten (13) und den Spurkranzrücken (14) erzeugenden Segmente (3,5) mittels mindestens einer durch das die Lauffläche (11) und die Spurkranzflanke (12) erzeugende Segment (4) hier durchgeführten Zug-/Druckstange (21) gekoppelt sind.

8. Fräser nach einem der Ansprüche 1 bis 7, dadurch gekennzeichnet, daß mindestens Teile mindestens eines an mindestens einem Segment (3,4,5) angeordneten Schneidelements (7) bis in einen Zerspanungsbereich (16,17,18) eines benachbarten Segments (3,4,5) derart hineinragen, daß eine mindestens teilweise Überlappung der Zerspanungsbereiche (16,17,18) benachbarter Segmente (3,4,5) in verschiedenen axialen Stellungen jeweils benachbarter Segmente (3,4,5) zueinander vorliegt.

9. Fräser nach Anspruch 8, dadurch gekennzeichnet, daß die in einen Zerspanungsbereich (16,17,18) eines benachbarten Segments (3,4,5) hineinragenden Schneidelemente (7) eines jeweils zugeordneten Segments (3,4,5) eine geradlinige Schneidenkontur (18) aufweisen.

10. Fräser nach einem der Ansprüche 1 bis 9, dadurch gekennzeichnet, daß eine beidseitige Lagerung (19) der Fräserwelle (10) in einer Lagereinheit (20) vorgesehen ist.

11. Fräser nach Anspruch 1 bis 10, dadurch gekennzeichnet, daß der Fräser (1) zusammen mit der Lagereinheit (20) entsprechend der Lage des zu bearbeitenden Rades (28) in axialer Richtung beweglich und einstellbar ist.

12. Fräser nach einem der Ansprüche 10 oder 11, dadurch gekennzeichnet, daß der Fräser (1) zusammen mit der Lagereinheit (20) austauschbar ist.

13. Fräser nach einem der Ansprüche 1 bis 12, dadurch gekennzeichnet, daß mindestens ein nach außen offener Hohlraum (22) zwischen zwei benachbarten, relativ zueinander beweglichen Segmenten (3,4,5) des Fräsers (1) radial von innen nach außen von einem aus mindestens einer Öffnung (23) in mindestens einem der zugeordneten Segmente (3,4,5) des Tragkörpers (2) und/oder in der Fräserwelle (10) austretenden Strömungsmedium durchströmt wird, wobei das Strömungsmedium über mindestens eine Öffnung (23') in mindestens einen in der Fräserwelle (10) befindlichen, vom Antriebsende (24) her durchgängigen, mit mindestens einer Öffnung (23) verbundenen und ansonsten abgeschlossenen Kanalraum (25) in mindestens einen Hohlraum (22) einbringbar ist.

14. Fräser nach einem der Ansprüche 10 bis 13, dadurch gekennzeichnet, daß der Fräser (1) zusammen mit der gesamten Lagereinheit (20) mittels einer auf der Innenseite (29) oder der Außenseite (13) eines zu bearbeitenden Rades (28) anliegenden und axial verstellbaren Anschlagrolle (26) geführt wird.

15. Fräser nach einem der Ansprüche 1o bis 13, dadurch gekennzeichnet, daß der Fräser (1) zusammen mit der gesamten Lagereinheit (20) mechanisch mit ein zu bearbeitendes Rad (28) radial und axial führenden Stütz-und/oder Antriebsrollen (27) gekoppelt und relativ zu diesen einstellbar ist.

## Claims

1. Miller (1) for a wheel set milling machine with a plurality of cutting members (6, 7) distributed true to profile and in the peripheral direction on an essentially rotationally symmetrical support member (2) which can be driven in rotation, characterized in that the support member (2) is divided in the axial direction into several segments (3, 4, 5), at least one segment (3, 4, 5) being axially movable and adjustable.

2. Miller according to Claim 1, characterized in that between at least two adjacent segments (3, 4, 5) a torque (8) in the axial direction can be transmitted in a force-locking manner.

3. Miller according to Claim 1, characterized in that between at least two adjacent segments (3, 4, 5), a torque (8) in the axial direction can be transmitted in a form-locking manner.

4. Miller according to Claim 3, characterized in that an at least partially form-locking transmission of the torque (8) by means of toothing (9) in the form of a claw coupling takes place between respectively at least two adjacent segments (3, 4, 5).

5. Miller according to Claim 1, characterized in that at least one segment (3, 4, 5) is integral with a miller shaft (10).

6. Miller according to one of Claims 1 to 5, characterized in that a segment (4) of the support member (2) of the miller (1) producing the contact surface (11) and the rim side (12) of a wheel (28) to be machined, is integral with the miller shaft (10) and both a segment (3, 5) producing the outside (13) as well as a segment (3, 5) producing the back of the rim (14) of the wheel (28) to be machined is axially displaceable and adjustable relative to the integrally connected segment (4).

7. Miller according to Claim 6, characterized in that the segments (3, 5) producing the outsides (13) and the rim backs (14) are connected by means of at least one tie rod/pressure rod (21) guided through the segment (4) producing the contact surface (11) and the rim side (12).

8. Miller according to one of Claims 1 to 7, characterized in that at least parts of at least one cutting member (7) located on at least one segment (3, 4, 5) project into a machining region (16, 17, 18) of one adjacent segment (3, 4, 5) so that at least partial overlapping of the cutting regions (16, 17, 18) of adjacent segments (3, 4, 5) exists in different axial positions of respectively adjacent segments (3, 4, 5) with respect to each other.

9. Miller according to Claim 8, characterized in that the cutting members (7) of a respectively associated segment (3, 4, 5), which project into a cutting region (16, 17, 18) of an adjacent segment (3, 4, 5), have a rectilinear cutting edge contour (18).

10. Miller according to one of Claims 1 to 9, characterized in that a two-sided mounting (19) of the miller shaft (10) in a bearing unit (20) is provided.

11. Miller according to Claims 1 to 10, characterized in that the miller (1) together with the bearing unit (20) is movable in the axial direction and is adjustable corresponding to the position of the wheel (28) to be machined.

12. Miller according to one of Claims 10 or 11, characterized in that the miller (1) together with the bearing unit (20) is exchangeable.

13. Miller according to one of Claims 1 to 12, characterized in that flowing through at least one cavity (22), which is open towards the outside, between two adjacent segments (3, 4, 5), able to move relative to each other, of the miller (1), radially from the inside outwards is a flow medium escaping from at least one opening (23) in at least one of the associated segments (3, 4, 5) of the support member (2) and/or in the miller shaft (10), the flow medium being able to be introduced by way of at least one opening (23') into at least one channel chamber (25) located in the miller shaft (10), accessible from the driving end (24), connected to at least one opening (23) and otherwise closed off, into at least one cavity (22).

14. Miller according to one of Claims 10 to 13, characterized in that the miller (1) together with the entire bearing unit (20) is guided by means of an axially adjustable abutment roller (26) bearing on the inside (29) or the outside (13) of a wheel (28) to be machined.

15. Miller according to one of Claims 10 to 13, characterized in that the miller (1) together with the entire bearing unit (20) is connected mechanically to support and/or drive rollers (27) guiding a wheel (28) to be machined, radially and axially and is adjustable relative to the latter.

## Revendications

1. Fraise (1) pour une machine à fraiser les essieux, avec plusieurs éléments de coupe (6,7) répartis de façon adaptée au profil et dans le sens de la circonférence sur un élément porteur (2) sensiblement à symétrie de rotation et pouvant être entraîné en rotation, caractérisée en ce que l'élément porteur (2) est subdivisé en plusieurs segments (3,4,5) dans le sens axial, un segment (3,4,5) au moins étant mobile et réglable axialement.

2. Fraise selon la revendication 1 caractérisée en ce qu'au moins entre deux segments (3,4,5) adjacents, un moment de torsion (8) peut être transmis dans le sens axial sous l'effet de l'adhérence.

3. Fraise selon la revendication 1 caractérisée en ce qu'au moins entre deux segments (3,4,5) adjacents, un moment de torsion (8) peut être transmis dans le sens axial sous l'effet de l'engagement positif de forme.

4. Fraise selon la revendication 3 caractérisée en ce qu'une transmission au moins partielle du moment de torsion (8) sous l'effet de l'engagement positif de forme se fait au moyen d'un engrenage (9) ayant la forme d'un crabotage, ce respectivement entre au moins deux segments (3,4,5) adjacents.

5. Fraise selon la revendication 1 caractérisée en ce qu'au moins un segment (3,4,5) est solidaire d'une broche de fraisage (10).

6. Fraise selon l'une des revendications 1 à 5 caractérisée en ce qu'un segment (4) de l'élément porteur (2) de la fraise (1), segment formant la surface de roulement (11) et le flanc (12) du boudin d'une roue (28) devant être usinée, est d'un seul tenant avec la broche de fraisage (10) et en ce qu'un segment (3,5) formant aussi bien la partie extérieure (13) que le dos (14) du boudin de la roue (28) devant être usinée est mobile et réglable axialement par rapport au segment (4) solidaire.

7. Fraise selon la revendication 6 caractérisée en ce que les segments (3,5) formant les faces extérieures (13) et le dos (14) du boudin sont couplés au moyen d'au moins une barre de traction-compression (21) passant ici à travers le segment (4) formant la surface de roulement (11) et le flanc (12) du boudin.

8. Fraise selon l'une des revendications 1 à 7 caractérisée en ce qu'au moins des parties d'au moins un élément de coupe (7) disposé sur au moins un segment (3,4,5) font saillie jusque dans la zone d'usinage (16,17,18) d'un segment (3,4,5) adjacent de manière à ce qu'il y ait un chevauchement au moins partiel des zones d'usinage (16,17,18) de segments (3,4,5) adjacents dans des positions axiales différentes de segments adjacents (3,4,5) respectifs les uns par rapport aux autres.

9. Fraise selon la revendication 8 caractérisée en ce que les éléments de coupe (7) d'un segment (3,4,5) respectivement affecté, lesquels font saillie dans une zone d'usinage (16,17,18) d'un segment (3,4,5) adjacent, présentent un profil (18) de lame droit.

10. Fraise selon l'une des revendications 1 à 9 caractérisée en ce qu'on prévoit un logement bilatéral (19) de la broche de fraisage (10) dans une unité de paliers (20).

11. Fraise selon l'une des revendications 1 à 10 caractérisée en ce que la fraise (1) est mobile et réglable dans le sens axial de façon solidaire avec l'unité de paliers (20), ce en fonction de la position de la roue (28) à usiner.

12. Fraise selon l'une des revendications 10 ou 11 caractérisée en ce qu'il possible de changer la fraise (1) et l'unité de paliers (20) en même temps.

13. Fraise selon l'une des revendications 1 à 12 caractérisée en ce qu'au moins un espace vide (22) ouvert vers l'extérieur entre deux segments (3,4,5) adjacents de la fraise et mobiles l'un par rapport à l'autre, est traversé radialement de l'intérieur vers l'extérieur par un fluide provenant d'au moins une ouverture (23) réalisée dans au moins un des segments (3,4,5) affectés de l'élément porteur (2) et/ou dans la broche de fraisage (10), ce fluide pouvant arriver dans au moins un espace vide (22) par l'intermédiaire d'au moins une ouverture (23') réalisée dans au moins un conduit (25), lequel est situé dans la broche de fraisage (10), accessible à partir de l'extrémité d'entraînement (24), relié à au moins une ouverture (23) et fermé dans les autres cas.

14. Fraise selon l'une des revendications 10 à 13 caractérisée en ce qu'elle est guidée solidairement avec l'intégralité de l'unité de paliers (20) au moyen d'un galet de butée (26) mobile axialement et portant sur la face intérieure (29) ou extérieure (13) d'une roue (28) à usiner.

15. Fraise selon l'une des revendications 10 à 13 caractérisée en ce que la fraise (1) est accouplée solidairement avec l'intégralité de l'unité de paliers (20) à des galets supports et/ou des rouleaux d'entraînement (27), ce mécaniquement, et est réglable par rapport à ceux-ci.
